# EUROPÄISCHE PATENTSCHRIFT

(11) **EP 3 158 899 B1**
(45) Veröffentlichungstag und Bekanntmachung des Hinweises auf die Patenterteilung: **06.11.2019**
(21) Anmeldenummer: 16190294.5
(22) Anmeldetag: 23.09.2016
(51) Int. Cl.: A47J 31/36, A47J 31/44, A47J 31/06

(54) **HEISSGETRÄNKEZUBEREITUNGSEINRICHTUNG**
HOT BEVERAGE PREPARATION DEVICE
DISPOSITIF DE PRÉPARATION DE BOISSONS CHAUDES

(30) Priorität: 20.10.2015 DE 102015220439
(43) Veröffentlichungstag der Anmeldung: 26.04.2017
(73) Patentinhaber: BSH Hausgeräte GmbH, 81739 München (DE)
(72) Erfinder: Höglauer, Michael, 83246 Unterwössen (DE); Steffl, Michael, 83250 Marquartstein (DE); Schneider, Konrad, 83301 Traunreut (DE)

(56) Entgegenhaltungen:
- WO-A1-2011/111287
- WO-A1-2014/108813
- WO-A2-2011/077317
- DE-U1-202004 020 991
- US-A1- 2008 041 232

## Beschreibung

Die Erfindung betrifft eine Heißgetränkezubereitungseinrichtung insbesondere für Haushaltszwecke, mit einer zweiteiligen Brühkammer, in der sowohl vorgefertigten Extraktionsportionen wie Kaffeepads und Kaffeekapseln als auch Losgut, also Kaffeepulver oder Teeblätter, bei geringem oder unter einem mittleren bis hin zu einem hohen Druck zu einem Heißgetränk gebrüht werden können.

Heißgetränkezubereitungseinrichtungen basierend auf vorgefertigten Extraktionsportionen wie Kaffeepads und Kaffeekapseln, oder als Losgut, sind beispielsweise bekannt aus den Druckschriften WO 2011/111287 A1, WO 2014/108813 A1, WO 2011/077317 A2, US 2008/041232 A1 und DE 20 2004 020991 U1.

Die EP 1 845 826 B1 beschreibt eine Zubereitungseinrichtung, in der ein oder zwei Kaffeepads und/oder Kaffeepads mit unterschiedlichen Abmessungen aufgenommen und verarbeitet werden können. Damit erhält die Einrichtung einen breiten Anwendungsbereich. Kaffeepulver dagegen kann nicht verarbeitet werden, weil es nicht mit einer entsprechenden Verpackung versehen ist.

Aufgabe der Erfindung ist es, eine Heißgetränkezubereitungseinrichtung anzugeben, die sowohl für die Verarbeitung von Losgut als auch von vorgefertigten Extraktionsportionen geeignet ist. Dementsprechend soll die Zubereitungseinrichtung in einem Druckbereich von 0-19 bar arbeiten können.

Diese Aufgabe wird mit einer Heißgetränkezubereitungseinrichtung gelöst, die eine insofern herkömmliche zweiteilige Brühkammer umfasst, als sie aus einem Brühkopfoberteil und einem Brühkopfunterteil gebildet ist. Das Brühkopfunterteil ist mit einem Wasserauslass und mit einer Aufnahme für eine Anzahl von auswechselbaren Adaptern zum Variieren eines Volumens der Brühkammer oder auch zum Einsatz eines Siebträgers zur Aufnahme von Losgut ausgestattet. Das Brühkopfoberteil ist mit einem exzentrisch angeordneten Wassereinlass, mit einem elastisch auf das Brühkopfunterteil hin vorgespannten Kolben, mit einem zentrisch angeordneten Wasserdurchlass an einer dem Brühkopfunterteil zugewandten Unterseite des Kolbens und mit einer Dichteinrichtung ausgestattet, die im Betrieb zwischen dem Brühkopfoberteil und dem Adapter abdichtet, wobei in einem Leitungsweg für Brühwasser zwischen dem Wassereinlass und dem Wasserdurchlass fluidische Verzögerungsmittel angeordnet sind, so dass im Betrieb im Brühkopfoberteil zwischen ihm und dem Kolben zumindest anfangs ein deutlich höherer Druck besteht als im Brühkopfunterteil. Der erfindungsgemäße Brühkopf, der die Brühkammer enthält, ist also weitgehend herkömmlich zweiteilig aufgebaut, wobei das Brühkopfoberteil fest mit dem Gerätegehäuse der Zubereitungseinrichtung verbunden ist, während das Brühkopfunterteil entnehmbar und für den Betrieb mit dem Brühkopfoberteil koppelbar ist. Das Brühkopfunterteil verfügt über einen Griffabschnitt zu seiner manuellen Betätigung und über eine Aufnahme daran für eine Anzahl an auswechselbaren Adaptern. Durch Auswechseln der Adapter kann das Volumen der Brühkammer variiert werden, indem unterschiedlich große Kapseln mit vorgefertigten Extraktionsportionen in sie eingesetzt werden können oder auch ein Siebträger, um Losgut wie Kaffeemehl oder Teepulver einzufüllen. Unter dem Brühkopfunterteil befindet sich eine Tassenaufstellfläche, auf der ein Gefäß zur Aufnahme des zuzubereitenden Getränks abgestellt werden kann.

Das Brühkopfoberteil enthält einen elastisch gelagerten Kolben, der in eine Richtung auf das Brühkopfunterteil hin elastisch vorgespannt ist. Die Vorspannung sorgt für eine zuverlässige Anfangsabdichtung des Kolbens bzw. des Brühkopfoberteils gegenüber dem Adapter, wenn sie aneinander gekoppelt werden. Erst bei eingesetztem Adapter bzw. bei montiertem Brühkopfunterteil wird die Vorspannung des Kolbens aktiviert, so dass er auf den Adapter hin gedrückt wird und zusammen mit der Dichteinrichtung die Abdichtung zwischen Brühkopfoberteil und dem Adapter bzw. der darin eingesetzten Kapsel sicherstellt. Der Kolbendurchmesser ist größer bemessen als der Innendurchmesser des größten Adapters, der im Brühkopfunterteil einsetzbar ist, damit eine zuverlässige Abdichtung bei allen Kapselgrößen und allen Adaptern gewährleistet ist.

Für eine Getränkezubereitung ist zunächst das Brühkopfunterteil am Brühkopfoberteil zu koppeln. Für die dabei entstehende Vorspannung des Kolbens gegenüber dem Adapter ist lediglich eine geringe Betätigungskraft erforderlich, so dass dieser Bedienungsschritt für einen Benutzer leicht und zuverlässig korrekt vorzunehmen ist. Damit ist eine Erstabdichtung des Brühkopfoberteils gegenüber dem Adapter geschaffen. Durch Einschalten des Gerätes und Starten des Zubereitungsvorgangs wird unter Druck stehendes heißes Wasser durch den Wassereinlass in die Brühkammer geleitet. Bevor es jedoch den Adapter und dort das Getränkeextrakt erreicht, sorgen die fluidischen Verzögerungsmittel im Brühkopfoberteil durch einen Strömungswiderstand für einen Stau des Wassers, der den Druck im Brühkopfoberteil ansteigen lässt. Der Druck lastet auf dem elastisch gelagerten Kolben, der ihn über die Dichteinrichtung auf den Adapter weitergibt. Der erhöhte Druck sorgt also für eine zusätzliche Dichtkraft zwischen dem Brühkammeroberteil und dem Adapter, die umso höher ist, je höher der Druck des Zubereitungswassers ausfällt. Erst mit einer gewissen Verzögerung erreicht das unter Druck stehende Zubereitungswasser den Adapter, dringt in ihn ein bzw. durchdringt ihn und führt nach Verlassen des Brühkammerunterteils zum zubereiteten Getränk. Der zumindest anfängliche Druckunterschied zwischen dem Brühkopfoberteil und dem Brühkopfunterteil stellt sicher, dass ein Gegendruck im Brühkopfunterteil die Dichtwirkung zwischen dem Brühkopfoberteil und dem Adapter nicht beeinträchtigt. Damit verfolgt die Erfindung also das Prinzip, einerseits grundsätzlich nur geringe Schließkräfte beim Koppeln des Brühkopfunterteils am Brühkopfoberteil zu erfordern, aber andererseits auch bei hohen Zubereitungsdrücken eine zuverlässige Abdichtung zwischen dem Brühkopfoberteil und dem Adapter sicherzustellen. Auch hohe Zubereitungsdrücke fordern also dem Bediener keine höheren Schließkräfte ab. Der Erfindung gelingt dies, indem sie zunächst mit der Vorspannung des Kolbens eine erste Dichtkraft und damit eine zuverlässige Abdichtung erzeugt, anschließend den Zubereitungsdruck im Brühkammeroberteil staut und damit eine zusätzliche Dichtkraft hervorruft. Da sie aus dem Druck des Zubereitungswassers herrührt, ist sie umso höher, je höher der Arbeitsdruck der Heißgetränkezubereitungsmaschine für den jeweiligen Zubereitungsvorgang ist. Trotz eines unter Umständen hohen Arbeitsdrucks für die Zubereitung beispielsweise eines Espressos werden dem Benutzer jedoch die gleichen geringen Schließkräfte bei der Betätigung der Zubereitungseinrichtung abverlangt, wie wenn er einen beispielsweise Brühkaffee zubereiten möchte. Der Benutzer braucht also für die unterschiedlichen Getränkearten keine unterschiedlichen Betätigungsschritte insbesondere des Brühkopfunterteils vorzunehmen, sondern kann sie diesbezüglich in immer derselben Weise betätigen. Dies erleichtert die Betätigung der erfindungsgemäßen Heißgetränkezubereitungseinrichtung erheblich.

Im Stand der Technik sind verschiedene fluidische Verzögerungsmittel bekannt. Erfindungsgemäß kann eine Drossel als fluidisches Verzögerungsmittel dienen. Dabei handelt es sich um ein bekanntes Fluidelement, das zum Beispiel in einer starren Variante als konischer Leitungsabschnitt eine kontinuierliche Querschnittsverengung in Fließrichtung darstellt. Alternativ dazu lassen sich Drosseln auch mit sprungartiger Querschnittsverengung konstruieren. Alternativ zu feststehenden Drosseln gibt es auch solche mit beweglichen Elementen, beispielsweise geschlitzte oder perforierte Silikonscheiben, die aufgrund ihrer geringen Anfälligkeit für Verschmutzung wartungsfrei sind, oder Federdruckstücke, die den Vorzug bieten, dass sie einen genau definierten Öffnungsdruck erlauben. Stromauf des Wasserdurchlasses angeordnet führen die genannten Verzögerungsmittel zuverlässig zu einem erhöhten Strömungswiderstand, der den gewünschten Anfangsdruck bzw. die erste Dichtkraft im Brühkopfoberteil aufbaut.

Alternativ zu einer Drossel kann nach einer weiteren vorteilhaften Ausgestaltung der Erfindung eine Labyrinthführung stromauf des Wasserdurchlasses als Verzögerungsmittel angeordnet sein. Sie arbeitet nach dem Prinzip der Labyrinthdichtung und sorgt aufgrund einer stark vergrößerten Länge des Fließwegs und durch den dadurch bedingten Reibungswiderstand entlang dieses Fließwegs für einen erhöhten Strömungswiderstand. Sie braucht nicht zwingend einzügig konstruiert zu sein, also lediglich einen Durchgangsweg zu bieten, sondern kann mehrere parallele Fließwege bieten. Ihr Aufbau kann sich beispielsweise an sogenannten Stolperbundlabyrinthen im Stand der Technik orientieren.

Nach der Erfindung ist der Brühkopfinnenraum, vor allem der Kolben, im wesentlichen rotationssymmetrisch ausgebildet und folgt damit der Form der an übliche Kapseln angepassten Adapter, die von einer zentralen Wasserzufuhr und einem ebensolchen Wasserauslass ausgehen. Erfindungsgemäß bietet der Brühkopf eine exzentrische Anordnung des Wassereinlasses und eine zentrische Anordnung des Wasserdurchlasses mit dazwischen angeordneten Verzögerungsmitteln. Die meisten bekannten Kapseln erfordern ein zentrisches oberseitiges Anstechen für den Wassereinlass, woraus sich der zentrisch angeordnete Wasserdurchlass des Brühkopfoberteils ergibt. Der Wassereinlass in das Brühkopfoberteil dagegen ist davon konstruktiv an sich weitgehend unabhängig, wenn auch wegen des zentrischen Anstichs in einer ebenfalls zentrischen Anordnung naheliegend. Durch die erfindungsgemäße exzentrische Anordnung des Wassereinlasses und die dem gegenüber zentrische Anordnung des Wasserdurchlasses entsteht jedoch ein verlängerter Leitungsweg für das Brühwasser, der die Anordnung von Verzögerungsmitteln und somit zum Druckaufbau im Brühkopfoberteil ermöglicht.

Nach einer weiteren vorteilhaften Ausgestaltung der Erfindung kann die Dichteinrichtung unterseitig an dem vorgespannt gelagerten Kolben angeordnet und an ihm befestigt sein. Damit ist sichergestellt, dass der erfindungsgemäß beabsichtigte Druckaufbau im Brühkopfoberteil zuverlässig auf den Adapter wirkt.

Die Dichteinrichtung kann beispielsweise ringförmig gestaltet sein. Nach einer weiteren vorteilhaften Ausgestaltung der Erfindung kann die Dichteinrichtung als elastische Dichtscheibe an einer dem Brühkopfunterteil zugewandten Unterseite des Kolbens ausgebildet sein, die im Brühkopfoberteil eingespannt ist. Damit vereint die Dichtungseinrichtung mehrere Funktionen in sich: Einerseits ist sie Träger des Kolbens, der damit in seiner Vorspannrichtung elastisch gehalten ist. Andererseits dichtet sie das Brühkopfoberteil gegenüber einem eingesetzten Adapter ab. Ihre Einspannung im Brühkopfoberteil sorgt außerdem für ihre unverschiebbare Halterung, so dass sie jederzeit ihre bestimmungsgemäße Position gegenüber einem eingesetzten Adapter einnimmt. Ihre Scheibenform stellt eine Abdichtung bei allen geeigneten Innenradien der Adapter bzw. bei allen Kapseldurchmessern her.

Nach einer weiteren vorteilhaften Ausgestaltung der Erfindung können Abstandhalter auf einer dem Brühkopfoberteil zugewandten Oberseite des Kolbens oder auf einer der Oberseite des Kolbens zugewandten Unterseite des Brühkopfoberteils ausgebildet sein, die eine Leitungspassage bzw. einen Spalt zwischen dem Wassereinlass und dem Wasserdurchlass sicherstellen. In der Leitungspassage bzw. in dem Spalt können konzentrische Ringe mit radialen Durchlässen, sogenannte Spaltrippen, oder ein Stolperbundlabyrinth als Verzögerungsmittel angeordnet sind. Die konzentrisch angeordneten Spaltrippen selbst können als Abstandhalter dienen, so dass keine separaten Abstandhalter ausgebildet sein müssen. Auch das Stolperbundlabyrinth selbst kann die Funktion des Abstandshalters übernehmen und jenen entbehrlich machen. Die Anordnung dieser Verzögerungsmittel jedenfalls auf einer Oberseite des Kolbens oder auf einer Unterseite des Brühkammeroberteils bietet eine einfache Herstellungsmöglichkeit beispielsweise im Spritzgussverfahren. Die Anordnung auf der Oberseite des Brühkolbens erlaubt es außerdem, durch Austausch des Kolbens auch die Verzögerungsmittel bei Bedarf auszutauschen. Im Spalt zwischen der Oberseite des Kolbens einerseits und der Unterseite des Brühkopfoberteils andererseits bietet sich jedenfalls genügend Raum für die Anordnung der Verzögerungsmittel. Durch Variation von Spaltbreiten in den Spaltrippen oder von Querschnitten im Stolperbundlabyrinth lässt sich zudem mit einfachen Mitteln eine gleichmäßige Druckverteilung über die Kolbenfläche erzeugen, die für eine gleichmäßige Anpressung der Dichteinrichtung auf den Adapter erforderlich ist.

Nach einer weiteren vorteilhaften Ausgestaltung der Erfindung kann die der Oberseite des Kolbens zugewandte Unterseite des Brühkopfoberteil oder die der Unterseite des Brühkopfoberteils zugewandte Oberseite des Kolbens eine den Spaltrippen oder dem Stolperbundlabyrinth entsprechende Gestaltung aufweisen, also beispielsweise über eine passende erhabene oder vertiefte Profilierung verfügen. Das Verzögerungsmittel auf dem Kolben oder am Brühkopfoberteil kann dementsprechend in die passende Profilierung "eintauchen". Das "Eintauchen" der Kolbenoberseite in die Unterseite des Brühkopfoberteils oder umgekehrt erlaubt damit einen größeren Federweg des Kolbens, ohne die Verzögerungsmittel zu deaktivieren. Auch bei einem größeren erforderlichen Hub des Kolbens bleiben damit die im Spalt angeordneten Verzögerungsmittel aktiv.

Nach einer weiteren vorteilhaften Ausgestaltung der Erfindung kann die Oberseite des Kolbens zusätzlich oder alternativ zu einer entsprechenden Ausgestaltung der Spaltrippen bzw. des Stolperbundlabyrinths in Richtung des Wassereinlasses geneigt ausgebildet sein. Dadurch entsteht ein Spalt zwischen dem Brühkopfoberteil und der Oberseite des Kolbens, der zum Wassereinlass hin zunimmt bzw. von ihm weg abnimmt. Auch diese Gestaltung kann dazu dienen, eine gleichmäßige Druckverteilung zwischen dem Brühkopfoberteil und dem Kolben zu bewirken.

Nach einer weiteren vorteilhaften Ausgestaltung der Erfindung kann das Brühkopfunterteil als Siebträgerhalter oder als Schublade ausgebildet sein. Eine Ausbildung als Siebträgerhalter und seine Bedienung ist dem Benutzer von klassischen Espressomaschinen, aber auch von neueren Kapselmaschinen bekannt, die mit höherem Druck arbeiten. Alternativ dazu kann das Brühkopfunterteil allerdings auch als Schublade ausgebildet sein, wie sie insbesondere für Kaffeepadmaschinen Verwendung findet. Aufgrund der nur geringen erforderlichen Betätigungskraft bietet die Erfindung die Möglichkeit, dass Brühkopfunterteil nach beiden Varianten auszugestalten und damit flexibel beispielsweise an einen Designbedarf anzupassen.

Das Prinzip der Erfindung wird im Folgenden anhand einer Zeichnung beispielshalber noch näher erläutert. In der Zeichnung zeigen:
- Figur 1:: eine teilgeschnittene Explosionsdarstellung einer erfinderischen Brühkammer,
- Figur 2:: einen Schnitt durch eine Brühkammer,
- Figur 3:: eine perspektivische Ansicht eines Kolbens eines Brühkopfoberteils.

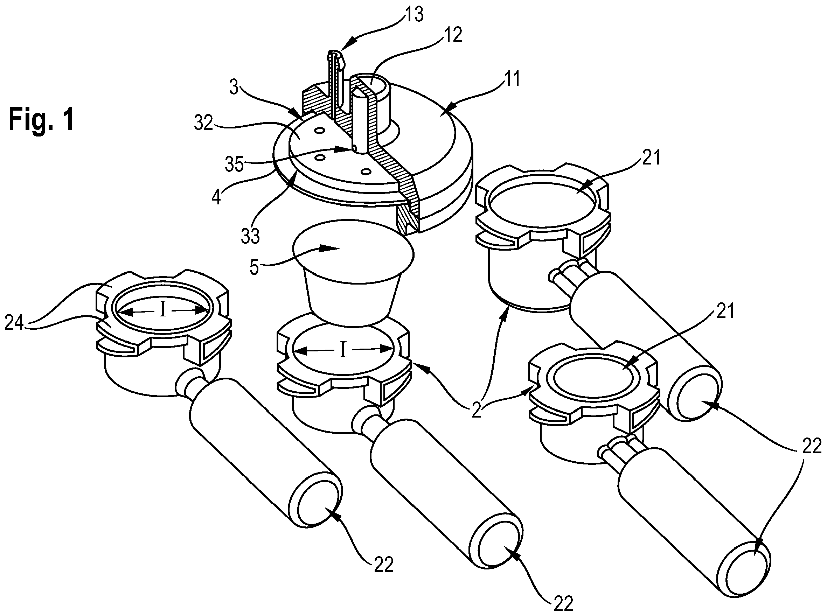

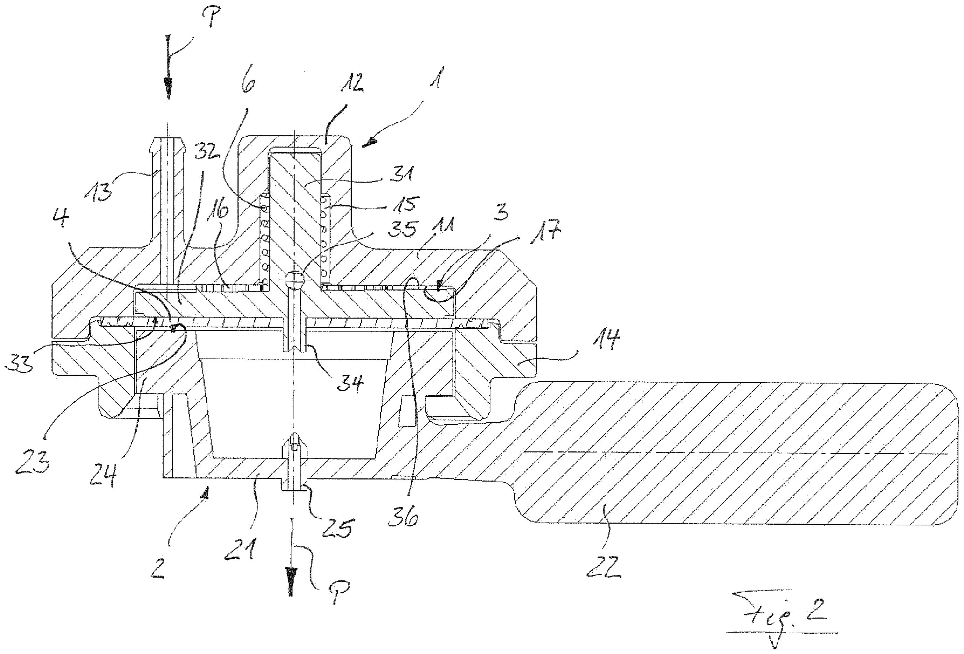

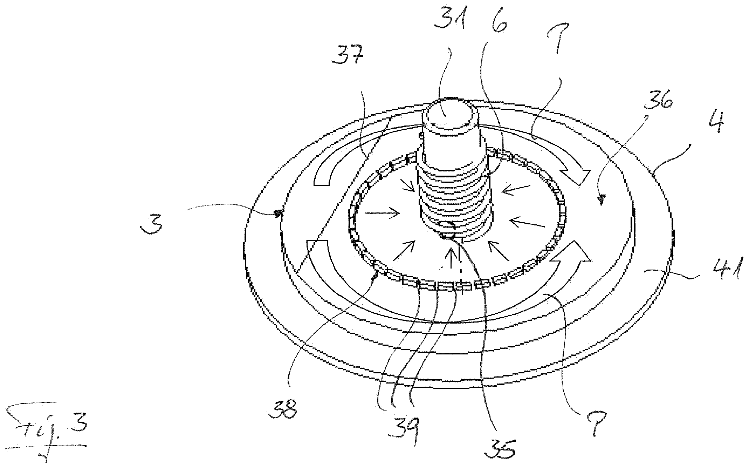

Figur 1 zeigt bespielhaft Teile einer Brühkammer einer erfindungsgemäßen Heißgetränkezubereitungseinrichtung, nämlich ein teilgeschnittenes Brühkopfoberteil 1 und vier Brühkopfunterteile 2. Das Brühkopfoberteil 1 ist im Betrieb in einem Gerätegehäuse der Zubereitungseinrichtung integriert und für einen Benutzer zum Anbringen des Brühkopfunterteils 2 nur von einer nicht einsehbaren Unterseite aus zugänglich. Es ist im Wesentlichen rotationssymmetrisch aufgebaut und umfasst einen tellerförmigen Abschnitt 11, von dem sich mittig ein zylindrischer hohler und oberseitig geschlossener Dom 12 und exzentrisch ein rohrförmiger Wassereinlass 13 erhebt. Innerhalb seines tellerförmigen Abschnitts 11 ist ein ebenfalls rotationssymmetrischer Kolben 3 angeordnet, der mit einem zentrischen stiftförmigen Schaft 31 in den Dom 12 hineinragt und sich im Übrigen mit einem scheibenförmigen Abschnitt 32 über den wesentlichen Innenraum des Brühkammeroberteils 1 erstreckt. Der tellerförmige Abschnitt 11 umgibt den scheibenförmigen Abschnitt 32 sowohl an dessen schaftseitiger Oberseite 36 als auch an seinem Umfang. An seiner dem Brühkammeroberteil 1 abgewandten Unterseite 33 ist eine scheibenförmige elastische Dichtung 4 angeordnet. In Figuren 2 und 3 ist das Brühkammeroberteil 1 noch detaillierter dargestellt.

Die erfindungsgemäße Heißgetränkezubereitungseinrichtung verfügt über eine Anzahl an Brühkammerunterteilen 2, die sich jeweils aus unterschiedlichen Adaptern 21 und im Übrigen gleichartigen Griffen 22 zusammensetzen. Die topfförmigen Adapter 21 unterscheiden sich im Wesentlichen hinsichtlich der Größe ihres Innendurchmessers I voneinander, so dass sie Substratkapseln 5 unterschiedlichen Umfangs aufnehmen können. Im Übrigen weisen sie übereinstimmend an ihrem oberen Rand 23 vier Anschlagmittel 24 auf, mit denen sie im Brühkammeroberteil 1 in bekannter Weise durch eine Vierteldrehung verrastet werden können. Ein zentrischer Wasserauslass 25 (Figur 2) sorgt für eine Anstich der Substratkapseln 5 von einer Unterseite aus und für die Abgabe des Getränks. Ein weiterer nicht dargestellter Adapter 21 umfasst einen Siebträger, in den Losgut, z.B. gemahlener Kaffee oder Teepulver eingefüllt oder ein Kaffee- oder Tee-Pad eingelegt werden kann, um beispielsweise Brühkaffee oder Tee zuzubereiten. Für jede bekannte Kapselart oder jedes gebräuchliche Pad hält die erfindungsgemäße Heißgetränkezubereitungseinrichtung ein Brühkammerunterteil mit einem geeigneten Adapter bereit. Dadurch lässt sich mit der erfindungsgemäßen Heißgetränkezubereitungseinrichtung so gut wie jedes geläufige Getränke- oder Suppensubstrat verarbeiten, das auf dem Markt erhältlich ist.

Figur 2 zeigt einen Schnitt durch die erfindungsgemäße Brühkammer. Das Brühkammeroberteil 1 setzt sich demzufolge aus dem tellerförmigen Abschnitt 11 samt Dom 12 sowie einem ringförmigen Abschnitt 14 zusammen, der am tellerförmigen Abschnitt 11 unterseitig angebracht ist. Sie sind fest aneinander befestigt und spannen die scheibenförmige elastische Dichtung 4 an deren Rand ein. Die Dichtung 4 trennt damit den Innenraum des Brühkammeroberteils 1 vom Brühkammerunterteil 2 ab. Der Innenraum des Brühkammeroberteils 1, also der des tellerförmigen Abschnitts 11 und des Doms 12, wird im Wesentlichen vom Kolben 3 eingenommen. Jener liegt mit seiner Unterseite 33 auf der Dichtung 4 vollflächig auf und durchbohrt sie zentral mit einem zentrischen rohrförmigen Wasserdurchlass 34 in Richtung Brühkammerunterteil 2. Der Wasserdurchlass 34 mündet stromauf in einer zylindrischen und durchgängigen Querbohrung 35, die den Schaft 31 knapp oberhalb des scheibenförmigen Abschnitts 32 durchsetzt. Die Querbohrung 35 mündet damit in einem schmalen zylindrischen Ringraum 15 innerhalb des Doms 12, der von der Mantelfläche des Schafts 31 und von der Innenmantelfläche des Doms 12 andererseits begrenzt wird und vom scheibenförmigen Abschnitt 32 aus in etwa zwei Drittel der Höhe des Schafts 32 umgibt. Im Ringraum 15 ist Spiralfeder 5 angeordnet, die den Kolben 3 im Dom 12 abstützt und gegen die Dichtung 4 vorspannt. Am Übergang des Schafts 31 in den scheibenförmigen Abschnitt 32 schließt der Ringraum 15 radial an einen scheibenförmigen Spalt 16 an, der zwischen einer Unterseite 17 des Brühkammeroberteils 1 und einer Oberseite 36 des Kolbens 3 besteht. Er ist in fluidischer Verbindung mit dem Wassereinlass 13. Damit ist ein Fließweg für Zubereitungswasser in Gegenrichtung zu seiner Strömungsrichtung gemäß der Pfeile P vom Wassereinlass 13 aus zum Durchlass 34 hin beschrieben.

Figur 3 bietet einen Blick auf die Oberseite 36 des Kolbens 3, über die in radialer Richtung die Dichtung 4 mit einer elastischen ringförmigen Lippe 41 übersteht. Im Zentrum der Oberseite 36 erhebt sich der Schaft 31, dessen Mantelfläche die Spiralfeder 6 umgibt. Sie verläuft über die Querbohrung 35 hinweg, ohne sie zu verschließen. Die Oberseite 36 trägt auf ihrer linken Seite einen Knick 37 nach Art einer Sekante. Von dort aus steigt die Oberseite 36 in Richtung zum Schaft 31 und darüber hinaus leicht an, während sie in der Gegenrichtung eben ausgebildet ist. Im Schnitt der Figur 2 ist daher zu erkennen, dass sich der Spalt 16 unterhalb des Wassereinlasses 13 beginnend und in einer Richtung zum rechten Rand des Kolbens 3 hin verjüngt. Die Oberseite 36 des Kolbens 3 trägt außerdem einen mit dem Schaft 31 konzentrischen Spaltring 38, der von der Oberseite 36 orthogonal absteht und durch eine Vielzahl von unterschiedlich breiten Spalten 39 radial durchbrochen ist. Der Spaltring 38 bildet eine Art Abstandhalter zwischen der Oberseite 36 und der Unterseite 17, um den Spalt 16 (Figur 2) offen zu halten. Zugleich stellt er ein unten näher erläutertes Strömungshindernis bzw. Verzögerungsmittel für Zubereitungswasser dar.

Zum Betrieb der erfindungsgemäßen Heißgetränkezubereitungseinrichtung setzt der Benutzer das Brühkammerunterteil 2 mit seinem Adapter 21 von unten gegen das Brühkammeroberteil 1 und verdreht es um eine Vierteldrehung, so dass die Anschlagmittel 24 im Ring 14 in an sich bekannter Weise verrasten. Bei dieser Betätigung wird der Adapter 21 mit einer verhältnismäßig geringen Betätigungskraft gegen die Dichtung 4 gedrückt, so dass der Benutzer eine Erstabdichtung des Brühkammeroberteils und des Adapters 21 über die Dichtung 4 herstellt. Die dafür erforderliche Betätigungskraft ist bewusst gering gewählt, damit die Bedienung der Heißgetränkezubereitungseinrichtung nicht unnötig erschwert wird und auch das Lösen des Brühkopfunterteils vom Brühkopfoberteil 1 dem Benutzer keine Schwierigkeiten bereitet. Die Betätigungskraft ist jedoch gleich wohl so bemessen, dass die dadurch aufgebrachte erste Dichtkraft zwischen Brühkopfoberteil 1 und dem Brühkopfunterteil 2 eine zuverlässige Abdichtung insbesondere zwischen dem Brühkopfoberteil 1 und dem Adapter 21 mit der darin eingesetzten Substratkapsel 5 oder dem nicht dargestellten Siebträger hergestellt wird. Sofern eine Substratkapsel 5 verarbeitet wird, wird beim Einsetzen des Brühkopfunterteils 2 außerdem die Substratkapsel 5 oberseitig durch den Durchlass 34 und unterseitig im Adapter 21 angestochen.

Je nach gewähltem Getränk, das anschließend zubereitet werden soll, wird Zubereitungswasser erhitzt und in einem dafür erforderlichen Druck zwischen 0 bis rund 20 bar in die Brühkammer eingeleitet. Es gelangt durch den Wassereinlass 13 in den scheibenförmigen Spalt 16, wo es zunächst von außen auf den konzentrischen Spaltring 38 stößt. Durch seine Ringform verteilt sich das Wasser in Richtung der Pfeile P zunächst entlang dessen Außenumfangs über die weitgehend gesamte Oberseite 36 des Kolbens 3, bevor es anschließend durch die radialen Spalte 39 auf die Querbohrung 35 zuströmt. Dabei wirkt sowohl der Spaltring 38 bzw. seine Spalte 39 als auch der sich einseitig verengende Spalt 16 als Verzögerungsmittel, das dem Zubereitungswasser einen gewissen Strömungswiderstand entgegensetzt. Dadurch kann sich das unter Druck stehende Wasser in der erfindungsgemäßen Brühkammer zunächst noch nicht entspannen, sondern baut einen Druck im Bereich stromauf des Durchlasses 34 und damit auf der Oberseite 36 des Kolbens 3 auf. Die sich einseitig verjüngende Gestaltung des Spalts 16 sowie die unterschiedlich bemessenen Breiten der Spalte 39 sorgen dafür, dass sich dieser Druck gleichmäßig über die gesamte Oberfläche 36 aufbaut und den Kolben 3 gleichmäßig zentrisch auf den Adapter 21 presst.

Anschließend gelangt das Zubereitungswasser durch die Querbohrung 35 in den Durchlass 34 und erreicht damit das Getränkesubstrat. Da auch der Wasserauslass 25 einen gewissen Widerstand darstellt, baut sich auch im Brühkopfunterteil 2 ein Druck auf. Er ist jedoch jedenfalls anfangs geringer als derjenige im Brühkopfoberteil 1, so dass er nicht zu einer Deaktivierung der Dichtwirkung der Dichtung 4 gegenüber dem Adapter 21 führen kann. Je höher also der Druck des Zubereitungswassers gewählt wird und je höher daher der Gegendruck aus dem Brühkopfunterteil 2 sein könnte, umso höher ist der Druck im Brühkopfoberteil 1, der für eine zuverlässige Abdichtung zwischen dem Brühkopfoberteil 1 und dem Adapter 21 sorgt. Dabei können durchaus Druckunterschiede Brühkopfoberteil 1 und dem Wasserauslass 25 von 0,6 bis 1 bar gemessen werden. Er wird beeinflusst vom Druckerzeuger, also der Wasserpumpe und deren eventueller Taktung, vom Volumenstrom des Zubereitungswassers, vom Gegendruck des Substrats in der Substratkapsel 5, also von deren Füllmenge und Mahlgrad, sowie von der Spannungsversorung der Heißgetränkezubereitungseinrichtung, die auf die Pumpe wirkt.

Da es sich bei der vorhergehenden, detailliert beschriebenen Brühkammer um ein Ausführungsbeispiel handelt, kann sie in üblicher Weise vom Fachmann in einem weiten Umfang modifiziert werden, ohne den Bereich der Erfindung zu verlassen. Insbesondere kann auch die konkreten Ausgestaltungen der Verzögerungsmittel in anderer Form als in der hier beschriebenen erfolgen. Ebenso können die Adapter in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Brühkopfoberteil
- 2: Brühkopfunterteil
- 3: Kolben
- 4: Dichtung
- 5: Substratkapsel
- 6: Spiralfeder
- 11: tellerförmiger Abschnitt
- 12: Dom
- 13: Wassereinlass
- 14: Ring
- 15: Ringraum
- 16: Spalt
- 17: Unterseite
- 21: Adapter
- 22: Griff
- 23: oberer Rand
- 24: Anschlagmittel
- 25: Wasserauslass
- 31: Schaft
- 32: scheibenförmiger Abschnitt
- 33: Unterseite
- 34: Wasserdurchlass
- 35: Querbohrung
- 36: Oberseite
- 37: Knick
- 38: Spaltring
- 39: Spalt
- 41: elastische Lippe
- I: Innendurchmesser
- P: Strömungsrichtung

## Patentansprüche

1. Heißgetränkezubereitungseinrichtung insbesondere für Haushaltszwecke mit einer Brühkammer umfassend
- ein Brühkopfunterteil (2) mit einem Wasserauslass (25) und mit einer Aufnahme für eine Anzahl an auswechselbaren Adaptern (21),
- ein Brühkopfoberteil (1) mit einem Wassereinlass (13), mit einem elastisch auf das Brühkopfunterteil (2) hin vorgespannten Kolben (3), und mit einem Wasserdurchlass (34) an einer dem Brühkopfunterteil (2) zugewandten Unterseite (33) des Kolbens (3),
- eine Dichteinrichtung (4), die zwischen dem Brühkopfoberteil (1) und dem Adapter (21) abdichtet, und
- einen im Wesentlichen rotationssymmetrischen Brühkopfinnenraum,
wobei in einem Leitungsweg für Brühwasser zwischen dem Wassereinlass (13) und dem Wasserdurchlass (34) fluidische Verzögerungsmittel (38) angeordnet sind, so dass im Betrieb im Brühkopfoberteil (1) zumindest anfangs ein höherer Druck besteht als im Brühkopfunterteil (2), **gekennzeichnet durch**
eine exzentrische Anordnung des Wassereinlasses (13) und eine zentrische Anordnung des Wasserdurchlasses (34).

2. Heißgetränkezubereitungseinrichtung nach Anspruch 1, **gekennzeichnet durch** eine Drossel als fluidisches Verzögerungsmittel.

3. Heißgetränkezubereitungseinrichtung nach Anspruch 1, **gekennzeichnet durch** eine Labyrinthführung stromauf des Wasserdurchlasses (34) als Verzögerungsmittel.

4. Heißgetränkezubereitungseinrichtung nach einem der obigen Ansprüche, gekennzeichnet eine am Kolben (3) angeordneten Dichteinrichtung (4).

5. Heißgetränkezubereitungseinrichtung nach dem obigen Anspruch, **gekennzeichnet durch** eine elastische Dichtscheibe (4) als Dichteinrichtung an einer dem Brühkopfunterteil (2) zugewandten Unterseite (33) des Kolbens (3), die im Brühkopfoberteil (1) eingespannt ist.

6. Heißgetränkezubereitungseinrichtung nach einem der obigen Ansprüche, **gekennzeichnet durch** Abstandhalter (38) auf einer der Brühkopfoberteil (1) zugewandten Oberseite (36) des Kolbens (3) oder einer der Oberseite (36) des Kolbens (3) zugewandten Unterseite (17) des Brühkopfoberteil (1) zur Ausbildung einer Leitungspassage (16) zwischen dem Wassereinlass (13) und dem Wasserdurchlass (34), in ein konzentrischer Ring (38) mit radialen Durchlässen (39) oder ein Stolperbundlabyrinth als Verzögerungsmittel angeordnet ist.

7. Heißgetränkezubereitungseinrichtung nach dem obigen Anspruch, **gekennzeichnet durch** eine dem Ring (38) oder dem Stolperbundlabyrinth entsprechende Gestaltung einer der Oberseite (36) des Kolbens (3) zugewandten Unterseite (17) des Brühkopfoberteil (1) oder auf einer der Brühkopfoberteil (1) zugewandten Oberseite (36) des Kolbens (3).

8. Heißgetränkezubereitungseinrichtung nach einem der obigen Ansprüche, **gekennzeichnet durch** eine dem Wassereinlass zugewandte Neigung der Oberseite (36) des Kolbens (3)

9. Heißgetränkezubereitungseinrichtung nach einem der obigen Ansprüche, **gekennzeichnet durch** einen Siebträgerhalter oder durch eine Schublade als Brühkopfunterteil.

## Claims

1. Hot beverage preparation device, in particular for household purposes, with a brewing chamber comprising
- a brewing unit lower part (2) with a water outlet (25) and with a receptacle for a number of exchangeable adapters (21),
- a brewing unit upper part (1) with a water inlet (13), with a piston (3) which is resiliently pretensioned towards the brewing unit lower part (2), and with a water passage (34) on a lower side (33) of the piston (3) facing towards the brewing unit lower part (2),
- a sealing device (4), which seals between the brewing unit upper part (1) and the adapter (21), and
- a brewing unit interior which is substantially rotationally symmetrical,
wherein in a conducting path for brewing water between the water inlet (13) and the water passage (34), fluid delay means (38) are arranged, so that during operation in the brewing unit upper part (1), at least at the start, there is a higher pressure than in the brewing unit lower part (2), **characterised by** an eccentric arrangement of the water inlet (13) and a central arrangement of the water passage (34).

2. Hot beverage preparation device according to claim 1, **characterised by** a throttle as a fluid delay means.

3. Hot beverage preparation device according to claim 1, **characterised by** a labyrinth guide upstream of the water passage (34) as delay means.

4. Hot beverage preparation device according to one of the above claims, **characterised by** a sealing device (4) arranged on the piston (3).

5. Hot beverage preparation device according to one of the above claims, **characterised by** a resilient sealing disc (4) as sealing device on a lower side (33) of the piston (3) facing towards the brewing unit lower part (2), which is clamped in the brewing unit upper part (1).

6. Hot beverage preparation device according to one of the above claims, **characterised by** spacers (38) on an upper side (36) of the piston (3) facing towards the brewing unit upper part (1) or a lower side (17) of the brewing unit upper part (1) facing towards the upper side (36) of the piston (3) to form a conducting passage (16) between the water inlet (13) and the water passage (34), in a concentric ring (38) with radial passages (39), or a stumbling collar labyrinth is arranged as a delay means.

7. Hot beverage preparation device according to one of the above claims, **characterised by** a shape corresponding to the ring (38) or the stumbling collar labyrinth of a lower side (17) of the brewing unit upper part (1) facing towards the upper side (36) of the piston (3) or on an upper side (36) of the piston (3) facing towards the brewing unit upper part (1).

8. Hot beverage preparation device according to one of the above claims, **characterised by** an inclination of the upper side (36) of the piston (3) facing towards the water inlet.

9. Hot beverage preparation device according to one of the above claims, **characterised by** a filter basket holder or by a drawer as brewing unit lower part.

## Revendications

1. Dispositif de préparation de boissons chaudes, en particulier à des fins ménagères doté d'une chambre percolation comprenant:
- une partie inférieure de tête de percolation (2) avec une sortie d'eau (25) et avec un logement pour un nombre d'adaptateurs interchangeables (21),
une partie supérieure de tête de percolation avec une entrée d'eau (13), avec un piston (3) précontraint élastiquement sur la partie inférieure de tête de percolation, et avec un passage pour l'eau (34) sur une partie inférieure (33) du piston (3) face à la partie inférieure de tête de percolation (2),
- un dispositif d'étanchéité (4) placé à cet effet entre la partie supérieure de tête de percolation (1) et l'adaptateur (21) et
- un espace intérieur de tête de percolation essentiellement symétrique en rotation,
des moyens retardateurs de fluides (38) étant disposés dans un chemin guidant l'eau de percolation entre l'entrée d'eau (13) et le passage pour l'eau (34), de sorte qu'en service dans la partie supérieure de tête de percolation (1), il y a au moins au début, une pression supérieure à celle dans la partie inférieure de tête de percolation (2), **caractérisé par** un agencement excentrique de l'entrée d'eau (13) et un agencement central du passage pour l'eau (34).

2. Dispositif de préparation de boissons chaudes selon la revendication 1, **caractérisé par** un étranglement en guise de moyen retardateur de fluide.

3. Dispositif de préparation de boissons chaudes selon la revendication 1, **caractérisé par** un cheminement en labyrinthe en amont du passage pour l'eau (34) comme moyen retardateur.

4. Dispositif de préparation de boissons chaudes selon l'une des revendications ci-dessus, **caractérisé par** un dispositif d'étanchéité (4) situé sur le piston (3).

5. Dispositif de préparation de boissons chaudes selon la revendication précédente, **caractérisé par** une rondelle d'étanchéité (4) élastique comme dispositif d'étanchéité sur un côté inférieur (33) du piston (3) face à la partie inférieure de tête de percolation (2), contraint dans la partie supérieure de tête de percolation (1).

6. Dispositif de préparation de boissons chaudes selon l'une des revendications ci-dessus, **caractérisé par** une entretoise (38) sur un côté supérieur (36) du piston (3) face à la partie supérieure de tête de percolation (1) ou sur un côté inférieur (17) de la partie supérieure de tête de percolation (1) face à la partie supérieure (36) du piston (3) pour la réalisation d'un passage-guide (16) entre l'entrée d'eau (13) et le passage pour l'eau (34), disposé dans un anneau concentrique (38) doté de passages radiaux (39) ou un labyrinthe à obstacles comme moyen retardateur.

7. Dispositif de préparation de boissons chaudes selon la revendication ci-dessus, **caractérisé par** une réalisation correspondant à l'anneau (38) ou au labyrinthe à obstacles d'un côté inférieur (17) de la partie supérieure de tête de percolation (1) face au côté supérieur (36) du piston (3) ou sur un côté supérieur (36) du piston (3) face à la partie supérieure de tête de percolation (1).

8. Dispositif de préparation de boissons chaudes selon l'une des revendications ci-dessus, **caractérisé par** une inclinaison, face à l'entrée d'eau, du côté supérieur (36) du piston (3).

9. Dispositif de préparation de boissons chaudes selon l'une des revendications ci-dessus, **caractérisé par** un support de tamis ou par un tiroir en guise de partie inférieure de tête de percolation.
